# EUROPÄISCHE PATENTSCHRIFT

(11) **EP 3 356 705 B1**
(45) Veröffentlichungstag und Bekanntmachung des Hinweises auf die Patenterteilung: **04.09.2019**
(21) Anmeldenummer: 16741614.8
(22) Anmeldetag: 19.07.2016
(51) Int. Cl.: F16H 63/18, F16H 63/24, F16H 63/30, F01L 13/00

(54) **SCHALTGETRIEBE FÜR FAHRZEUGE MIT EINER VORRICHTUNG ZUM AXIALEN VERSTELLEN EINES SCHALTELEMENTES**
GEARBOX FOR VEHICLES WITH A DEVICE FOR AXIALLY DISPLACING A SHIFTING ELEMENT
BOÎTE DE VITESSES POUR VÉHICULES AVEC UN DISPOSITIF DE DÉPLACEMENT AXIAL D'UN ÉLÉMENT DE COMMANDE

(30) Priorität: 02.10.2015 DE 102015219106
(43) Veröffentlichungstag der Anmeldung: 08.08.2018
(73) Patentinhaber: Bayerische Motoren Werke Aktiengesellschaft, 80809 München (DE)
(72) Erfinder: GORDNER, Achim, 85253 Grossberghofen (DE); SEMET, Wolfgang, 85276 Pfaffenhofen (DE)
(86) Internationale Anmeldenummer: PCT/EP2016/067187
(87) Internationale Veröffentlichungsnummer: WO 2017/054953

(56) Entgegenhaltungen:
- DE-A1-102007 056 692
- DE-A1-102008 036 462
- DE-A1-102009 009 080
- DE-A1-102009 054 942
- DE-A1-102010 048 739
- DE-A1-102012 020 426
- DE-A1-102013 204 655

## Beschreibung

Die Erfindung betrifft ein Schaltgetriebe für Fahrzeuge, mit einer Antriebswelle und einer Vorrichtung zum axialen Verstellen eines Schaltelements .

Aus der DE 10 2005 003 079 A1 ist ein Ventiltrieb für eine Brennkraftmaschine bekannt, mit einer Nockenwelle, auf der ein Nockenträger sowie zwei Schneckentriebe zum axialen Verstellen des Nockenträgers vorgesehen sind. Jedem Schneckentrieb ist ein Stellglied mit einem Betätigungsstift zugeordnet, wobei der Betätigungsstift mit Bezug auf die Nockenwelle radial verschieblich angeordnet ist und mit dem zugeordneten Schneckentrieb wahlweise in Eingriff oder außer Eingriff gebracht werden kann. Der eine Schneckentrieb mit seinem zugeordneten Stellglied bewirkt dabei eine axiale Bewegung des Nockenträgers von einer ersten Schaltstellung in eine zweite Schaltstellung, wohingegen der andere Schneckentrieb mit seinem zugeordneten Stellglied eine entgegengesetzte axiale Bewegung zurück in die erste Schaltstellung ermöglicht.

Weitere Ventiltriebe sind aus der DE 10 2009 009 080 A1, der DE 10 2007 056 692 A1 sowie der DE 10 2013 204 655 A1 bekannt.

Schaltgetriebe mit einer Vorrichtung zum axialen Verstellen eines Schaltelements sind aus der DE 10 2009 054 942 A1, der DE 10 2010 048 739 A1 sowie der gattungsgemäßen DE 10 2012 020 426 A1 bekannt.

Aufgabe der Erfindung ist es, ein Schaltgetriebe für Fahrzeuge mit einer besonders kompakten Vorrichtung zum axialen Verstellen eines Schaltelements zu schaffen, welche mit geringem konstruktiven Aufwand eine gewünschte Axialverstellung sicherstellt und kostengünstig herstellbar ist.

Diese Aufgabe wird erfindungsgemäß gelöst durch ein Schaltgetriebe für Fahrzeuge, umfassend eine Antriebswelle und eine Vorrichtung zum axialen Verstellen eines Schaltelements, mit einer Schaltwelle, die um eine Achse drehbar ist, einem Stellkörper, der drehfest sowie axial verschieblich mit der Schaltwelle verbunden ist und auf einer Umfangsfläche wenigstens zwei als Nut ausgebildete Kulissenführungsabschnitte aufweist, sowie einem Linearaktuator, der dem Stellkörper zugeordnet ist und einen betätigbaren Aktuatorstift aufweist, welcher zum axialen Verschieben des Stellkörpers in die Kulissenführungsabschnitte eingreifen kann, wobei jeder Kulissenführungsabschnitt einen Einkoppelbereich für den Aktuatorstift, einen entgegengesetzten Auskoppelbereich für den Aktuatorstift sowie einen in Umfangsrichtung dazwischenliegenden, kurvenförmig gebogenen Stellbereich zum axialen Verschieben des Stellkörpers aufweist, wobei der Auskoppelbereich und der Einkoppelbereich in Umfangsrichtung benachbarter Kulissenführungsabschnitte auf derselben axialen Position angeordnet sind, und wobei das Schaltelement eine Schiebemuffe ist. Die Antriebswelle und die Schaltwelle sind hierbei durch ein Getriebe mit fester Übersetzung gekoppelt. Dabei wird die Rotation der Antriebswelle durch das Getriebe bevorzugt ins Langsame übersetzt. Somit können auch längere Ansprech- und Schaltzeiten des Linearaktuators akzeptiert und damit die Kosten für den Linearaktuator verringert werden. Ferner lässt sich das Schaltelement mit nur einem einzigen Linearaktuator axial in entgegengesetzte Richtungen verstellen, sodass sich eine gewünschte Schaltposition des Schaltelements mit geringem Aufwand realisieren lässt.

Gemäß einer Ausführungsform gehen in Umfangsrichtung benachbarte Kulissenführungsabschnitte ineinander über und bilden eine in Umfangsrichtung stetig umlaufende Kulissenführung. Dies bedeutet mit anderen Worten, dass die als Nut ausgebildete, in Umfangsrichtung umlaufende Kulissenführung keine Unstetigkeitsstellen, d.h. keine "Sprünge" in axialer Richtung aufweist.

Alternativ können in Umfangsrichtung benachbarte Kulissenführungsabschnitte voneinander beabstandet sein, sodass in Umfangsrichtung zwischen diesen als Nut ausgebildeten Kulissenführungsabschnitten nutfreie Abschnitte vorhanden sind. Diese nutfreien Abschnitte ermöglichen ein einfacheres Ein- und Auskoppeln des Aktuatorstifts in die Kulissenführungsabschnitte.

Vorzugsweise sind die Einkoppelbereiche und/oder die Auskoppelbereiche der Kulissenführungsabschnitte zumindest abschnittsweise als Rampen zur Verringerung einer radialen Nuttiefe ausgeführt. Diese Rampen tragen ebenfalls zu einer einfacheren Einkopplung bzw. Auskopplung des Aktuatorstifts in die als Nut ausgebildeten Kulissenführungsabschnitte bei. Ferner lässt sich bei geeigneter Sensorik im Linearaktuator über die mittels der Rampen veränderte Radialposition des Aktuatorstifts auch das Durchfahren eines Einkoppelbereichs bzw. eines Auskoppelbereichs feststellen.

Besonders bevorzugt sind der Einkoppelbereich und der entgegengesetzte Auskoppelbereich eines, insbesondere jedes Kulissenführungsabschnitts axial voneinander beabstandet. Dadurch wird der Stellkörper durch den axial fixierten Linearaktuator zwischen dem Einkoppeln und dem Auskoppeln in die als Nut ausgebildeten Kulissenführungsabschnitte in gewünschter Art und Weise axial verschoben.

Gemäß einer Ausführungsform weist der Stellkörper genau zwei Kulissenführungsabschnitte auf, welche sich bevorzugt über jeweils etwa 180° erstrecken.

Alternativ kann der Stellkörper genau vier Kulissenführungsabschnitte aufweisen, wobei sich in diesem Fall jeder Kulissenführungsabschnitte bevorzugt über etwa 90° erstreckt.

Allgemein kann der Stellkörper eine gerade Anzahl an Kulissenführungsabschnitten aufweisen, wobei sich in diesem Fall jeder Kulissenführungsabschnitt bevorzugt über etwa 360° / Anzahl der Kulissenführungsabschnitte erstreckt.

Vorzugsweise ist im Übrigen ein Drehwinkelsensor zur Bestimmung der Drehstellung des Stellkörpers vorgesehen. Das Erfassen der Drehstellung des Stellkörpers ist insbesondere dann vorteilhaft, wenn der Stellkörper mehr als zwei Kulissenführungsabschnitte aufweist und wenigstens zwei Einkoppel- bzw. Auskoppelbereiche des Stellkörpers auf derselben axialen Position angeordnet sind.

Der Stellkörper und das Schaltelement können in einer Ausführungsform in axialer Richtung mittels eines Federelements gekoppelt sein. Diese axial elastische Kopplung stellt eine Überlastsicherung dar und verhindert, dass das Schaltgetriebe durch eine axiale Verstellbewegung des Stellkörpers bei axial blockiertem Schaltelement Schaden nimmt.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 eine schematische Schnittansicht einer erfindungsgemäßen Vorrichtung zum axialen Verstellen eines Schaltelements gemäß einer Ausführungsform;
- Figur 2 eine Abwicklung der Kulissenführungsabschnitte eines Stellkörpers der Vorrichtung gemäß Figur 1 in unterschiedlichen Schaltstellungen;
- Figur 3 eine schematische Schnittansicht einer Vorrichtung zum axialen Verstellen eines Schaltelements gemäß einer alternativen Ausführungsform, die nicht beansprucht wird;
- Figur 4 eine perspektivische Darstellung eines Stellkörpers für eine erfindungsgemäße Vorrichtung zum axialen Verstellen eines Schaltelement; und
- Figur 5 eine perspektivische Darstellung eines Stellkörpers für eine Vorrichtung zum axialen Verstellen eines Schaltelement gemäß dem Stand der Technik.

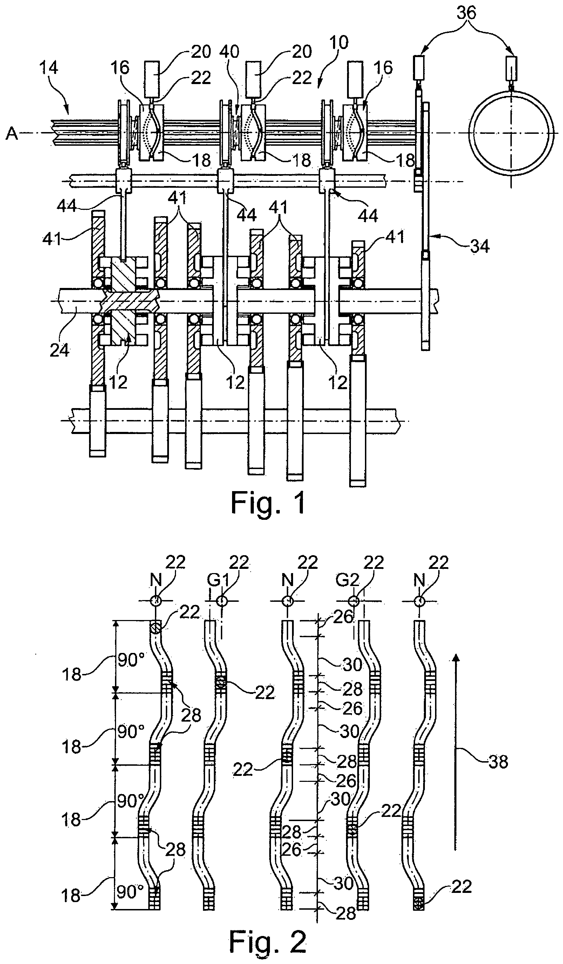

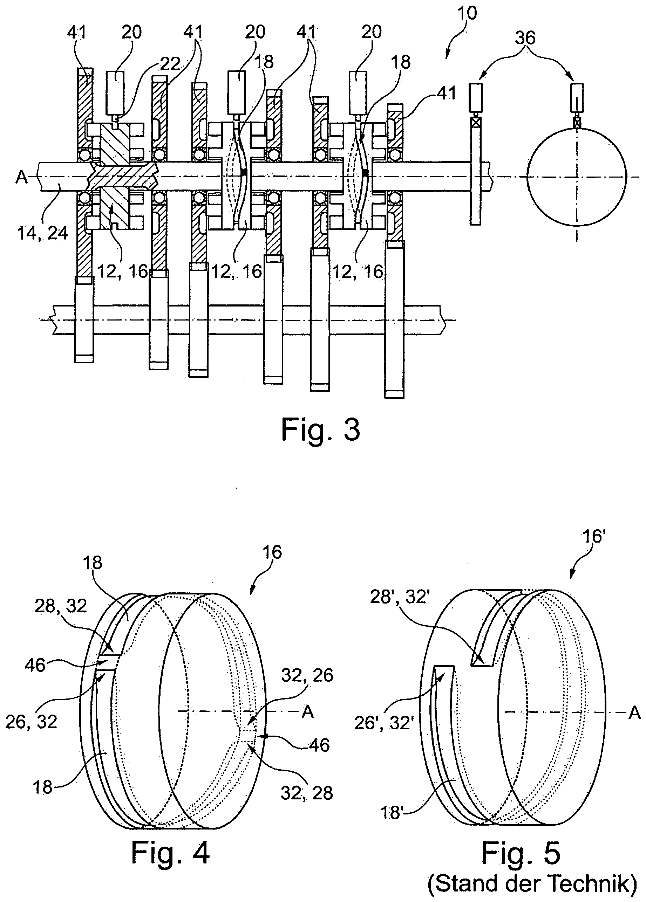

Die Figuren 1 und 3 zeigen jeweils eine Vorrichtung 10 zum axialen Verstellen eines Schaltelements 12, mit einer Schaltwelle 14, die um eine Achse A drehbar ist, einem Stellkörper 16, der drehfest sowie axial verschieblich mit der Schaltwelle 14 verbunden ist und auf einer radialen Außenumfangsfläche wenigstens zwei als Nut ausgebildete Kulissenführungsabschnitte 18 aufweist. Weiterhin ist ein Linearaktuator 20 vorgesehen, der dem Stellkörper 16 zugeordnet ist und einen betätigbaren Aktuatorstift 22 aufweist, welcher zum axialen Verschieben des Stellkörpers 16 in die Kulissenführungsabschnitte 18 eingreifen kann.

In den dargestellten Ausführungsbeispielen ist die Vorrichtung 10 zum axialen Verstellen des Schaltelements 12 ein Schaltgetriebe für Fahrzeuge, wobei das Schaltgetriebe eine Antriebswelle 24 aufweist, die mit der Schaltwelle 14 getriebemäßig verbunden oder identisch ist, und wobei das Schaltelement 12 eine Schiebemuffe des Schaltgetriebes ist.

Alternativ wäre jedoch auch denkbar, dass die Vorrichtung 10 zum axialen Verstellen des Schaltelements 12 zum Beispiel ein Ventilantrieb für Brennkraftmaschinen ist, wobei die Schaltwelle 14 eine Nockenwelle und das Schaltelement 12 ein Nockenträger ist.

Gemäß Figur 1 weist die als Schaltgetriebe ausgeführte Vorrichtung 10 drei als Schiebemuffen ausgebildete Stellkörper 16 mit jeweils einem zugeordneten Linearaktuator 20 auf. Selbstverständlich kann die Vorrichtung 10 jedoch auch mehr oder weniger Stellkörper 16 aufweisen.

Im vorliegenden Fall handelt es sich bei dem Schaltgetriebe um ein 6-Gang Getriebe, bei dem jeder Stellkörper 16 seine zugeordnete Schiebemuffe in drei unterschiedliche Axialstellungen, nämlich zwei axial entgegengesetzte Schaltstellungen G1, G2 und eine mittig dazwischenliegende Neutralstellung N bewegen kann (vgl. Figur 2).

Die Figur 2 zeigt eine Abwicklung der Kulissenführungsabschnitte 18 eines der Stellkörper 16 gemäß Figur 1, wobei der Stellkörper im dargestellten Ausführungsbeispiel genau vier Kulissenführungsabschnitte 18 aufweist, die sich jeweils über 90° erstrecken.

Jeder Kulissenführungsabschnitt 18 umfasst gemäß Figur 2 einen Einkoppelbereich 26 für den Aktuatorstift 22, einen in Nutlängsrichtung entgegengesetzten Auskoppelbereich 28 für den Aktuatorstift 22 sowie einen in Umfangsrichtung dazwischenliegenden, kurvenförmig gebogenen Stellbereich 30 zum axialen Verschieben des Stellkörpers 16, wobei der Einkoppelbereich 26 und der Auskoppelbereich 28 in Umfangsrichtung benachbarter Kulissenführungsabschnitte 18 auf derselben axialen Position angeordnet sind. Auf derselben axialen Position bedeutet, dass die in Umfangsrichtung aneinandergrenzenden Enden benachbarter Kulissenführungsabschnitte 18 axial nicht versetzt angeordnet sind. Ohne einen axialen Versatz gehen die benachbarten Kulissenführungsabschnitte 18 in Umfangsrichtung dann entweder direkt ineinander über (siehe Figuren 1-3) oder sind durch einen nutfreien Abschnitt voneinander getrennt (siehe Figur 4). Auf diese Weise lässt sich das als Schiebemuffe ausgebildete Schaltelement 12 ausgehend von einer Neutralstellung N mit nur einem einzigen Linearaktuator 20 axial in wenigstens eine Schaltstellung G1, G2 und wieder zurück in die Neutralstellung bewegen. Somit werden zur Realisierung gewünschter Schaltfunktionen deutlich weniger Linearaktuatoren benötigt als im Stand der Technik.

Während der Stellbereich 30 jedes Kulissenführungsabschnitts 18 zum axialen Verschieben des Stellkörpers 16 kurvenförmig gebogen ist, erstrecken sich der Einkoppelbereich 26 und der in Umfangsrichtung entgegengesetzte Auskoppelbereich 28 jedes Kulissenführungsabschnitts 18 gemäß Figur 2 linear und im Wesentlichen senkrecht zur Achse A, um ein Einkoppeln bzw. Auskoppeln des zugeordneten Aktuatorstifts 22 zu vereinfachen. Folglich sind der Einkoppelbereich 26 und der entgegengesetzte Auskoppelbereich 28 jedes Kulissenführungsabschnitts 18 axial voneinander beabstandet.

Gemäß Figur 2 gehen in Umfangsrichtung benachbarte Kulissenführungsabschnitte 18 direkt ineinander über und bilden eine in Umfangsrichtung stetig umlaufende Kulissenführung. Mit anderen Worten bilden die als Nut ausgeführten Kulissenführungsabschnitte 18 insgesamt eine auf der radialen Außenseite des Stellkörpers 16 stetig umlaufende Nut, die keine "Sprünge" in axialer Richtung aufweist.

Die Einkoppelbereiche 26 und/oder die Auskoppelbereiche 28 können zumindest abschnittsweise als Rampen 32 zur Verringerung einer radialen Nuttiefe ausgeführt sein. Im Stellbereich 30 stellt eine vergleichsweise große radiale Nuttiefe eine zuverlässige Führung des Aktuatorstifts 22 im Kulissenführungsabschnitt 18 sicher, während eine durch Rampen verringerte radiale Nuttiefe in den Ein- und Auskoppelbereichen 26, 28 das Einkoppeln bzw. Auskoppeln des Aktuatorstifts 22 erleichtert.

Die Figur 1 zeigt eine Ausführungsform der Vorrichtung 10, bei der die Antriebswelle 24 des Schaltgetriebes und die separate, als Keilwelle ausgebildete Schaltwelle 14 der Vorrichtung 10 durch ein Übersetzungsgetriebe 34 mit fester Übersetzung gekoppelt sind, wobei das Übersetzungsgetriebe 34 eine Rotation der Antriebswelle 24 ins Langsame übersetzt. Somit können längere Ansprech- und Schaltzeiten des Linearaktuators 20 akzeptiert und damit die Kosten für den Linearaktuator 20 verringert werden.

Ferner weist die Vorrichtung 10 einen Drehwinkelsensor 36 zur Bestimmung der Drehstellung des Stellkörpers 16 auf. Ein solcher Drehwinkelsensor 36 ist insbesondere dann vorteilhaft wenn, wie zum Beispiel in der Ausführungsform gemäß den Figuren 1 und 2, mehr als zwei Kulissenführungsabschnitte 18 auf der Umfangsfläche des Stellkörpers 16 vorgesehen sind.

Die Kulissenführungsabschnitte 18 definieren gemäß Figur 2 eine Neutralstellung N (Abbildungen links außen und rechts außen), an die sich in Drehrichtung 38 des Stellkörpers 16 eine erste Schaltstellung G1 anschließt, sowie eine weitere Neutralstellung N (mittlere Abbildung), an die sich in Drehrichtung 38 des Stellkörpers 16 eine zweite Schaltstellung G2 anschließt.

Ausgehend von einer axialen Neutralstellung des Stellkörpers16 wird abhängig von der Drehstellung des Stellkörpers 16, in welcher der Aktuatorstift 22 in die Kulissenführungsabschnitte 18 einkoppelt, ein der ersten Schaltstellung zugeordneter Gang oder ein der zweiten Schaltstellung zugeordneter Gang eingelegt. Soll nun in einen bestimmten Gang geschaltet werden, lässt sich der Linearaktuator 20 durch den Drehwinkelsensor 36 so ansteuern, dass der Aktuatorstift 22 bei geeigneter Drehstellung des Stellkörpers 16 in den entsprechenden Kulissenführungsabschnitt 18 einkoppelt.

Hinsichtlich der Sensorgenauigkeit ist es vollkommen ausreichend, wenn sich durch den Drehwinkelsensor 36 zuverlässig die beiden Einkoppelbereiche 26 der Kulissenführungsabschnitte 18 identifizieren lassen, die auf derselben axialen Position angeordnet sind. Gemäß Figur 2 sind diese beiden Einkoppelbereiche 26 in Umfangsrichtung um etwa 180° beabstandet, liegen sich als im Wesentlichen gegenüber.

Gemäß Figur 1 sind der Stellkörper 16 und das Schaltelement 12 in axialer Richtung über ein Federelement 40 gekoppelt. Konkret wird bei einer axialen Verschiebung des Stellkörpers 16 über das Federelement 40 ein Stellrad aufschlagt. Dieses Stellrad ist über eine Schaltgabel 44 in axialer Richtung formschlüssig mit der Schiebemuffe verbunden. Somit lässt sich die Schiebemuffe durch den Stellkörper 16 in ihre axiale Neutralstellung (mittlere und rechte Schiebemuffe in Figur 1) oder in eine ihrer axialen Schaltstellungen G1, G2 (linke Schiebemuffe in Figur 1) verschieben, wobei die Neutralstellung einem Leerlauf entspricht. In der Schaltstellung G1, G2 ist die Antriebswelle 24 über die Schiebemuffe im Wesentlichen drehfest mit einem Gangrad 41 verbunden und ein zugeordneter Gang des Schaltgetriebes eingelegt. Die axial elastische Kopplung durch das Federelement 40 stellt eine Überlastsicherung dar und verhindert, dass das Schaltgetriebe durch eine axiale Verstellbewegung des Stellkörpers 16 bei axial blockierter Schiebemuffe Schaden nimmt.

Die Figur 3 zeigt eine weitere Ausführungsform der Vorrichtung 10, wobei das allgemeine Konstruktionsprinzip und die Funktionsweise im Wesentlichen der Ausführungsform gemäß Figur 1 entspricht, sodass diesbezüglich auf die obige Beschreibung verwiesen und im Folgenden nur auf die Unterschiede eingegangen wird.

Die Vorrichtung 10 gemäß Figur 3 unterscheidet sich von der Ausführungsform gemäß Figur 1 im Wesentlichen dadurch, dass die Antriebswelle 24 des Schaltgetriebes der Schaltwelle 14 der Vorrichtung 10 entspricht und der Stellkörper 16 mit der Schiebemuffe identisch ist. Die Kulissenführungsabschnitte 18 sind folglich direkt auf der radialen Außenseite des als Schiebemuffe ausgebildeten Schaltelements angeformt, sodass sich die Anzahl der Einzelbauteile in vorteilhafter Weise reduziert. Allerdings wird im Bereich der Schiebemuffe ein vergleichsweise großer axialer Bauraum benötigt, um die Kulissenführungsabschnitte 18 anzuformen und daran angrenzend den Linearaktuator 20 anzuordnen.

Die Figur 4 zeigt einen transparent dargestellten Stellkörper 16 für eine Vorrichtung 10 zum axialen Verstellen eines Schaltelements 12, wobei der Stellkörper 16 genau zwei Kulissenführungsabschnitte 18 aufweist, die sich bevorzugt über jeweils etwas weniger als 180° erstrecken. Übertragen auf das zuvor beschriebene Schaltgetriebe könnte mit einem Stellkörper 16 gemäß Figur 4 sowie einem zugeordneten Linearaktuator 20 beispielsweise zwischen einer Neutralstellung N und (genau) einer der Schaltstellungen G1, G2 geschaltet werden.

Die in Umfangsrichtung benachbarten Kulissenführungsabschnitte 18 sind gemäß Figur 4 voneinander beabstandet, sodass in Umfangsrichtung zwischen den als Nut ausgebildeten Kulissenführungsabschnitten 18 nutfreie Abschnitte 46 vorhanden sind. Mit anderen Worten wird die radiale Nuttiefe der Kulissenführungsabschnitte 18 durch Rampen 32 in den Einkoppelbereichen 26 und Auskoppelbereichen 28 auf "Null" verringert. Diese nutfreien Abschnitte 46 ermöglichen ein besonders einfaches Ein- und Auskoppeln des Aktuatorstifts 22.

Die Figur 5 zeigt demgegenüber einen herkömmlichen Stellkörper 16' gemäß dem Stand der Technik. Dieser Stellkörper 16' weist auf seiner Umfangsfläche lediglich einen einzigen, als Nut ausgebildeten Kulissenführungsabschnitt 18' auf, dessen radiale Nuttiefe sich im Einkoppelbereich 26' und Auskoppelbereich 28' durch Rampen 32' auf "Null" verringert. Somit lässt sich durch den Stellkörper 16' lediglich eine einzige axiale Stellbewegung realisieren, z.B. von einer Neutralstellung N in eine der Schaltstellungen G1, G2 oder alternativ von einer der Schaltstellungen G1, G2 in die Neutralstellung N.

## Patentansprüche

1. Schaltgetriebe für Fahrzeuge, umfassend eine Antriebswelle (24) und eine Vorrichtung zum axialen Verstellen eines Schaltelements (12), mit
einer Schaltwelle (14), die um eine Achse (A) drehbar ist,
einem Stellkörper (16), der drehfest sowie axial verschieblich mit der Schaltwelle (14) verbunden ist und auf einer Umfangsfläche wenigstens zwei als Nut ausgebildete Kulissenführungsabschnitte (18) aufweist, sowie
einem Linearaktuator (20), der dem Stellkörper (16) zugeordnet ist und einen betätigbaren Aktuatorstift (22) aufweist, welcher zum axialen Verschieben des Stellkörpers (16) in die Kulissenführungsabschnitte (18) eingreifen kann,
wobei jeder Kulissenführungsabschnitt (18) einen Einkoppelbereich (26) für den Aktuatorstift (22), einen entgegengesetzten Auskoppelbereich (28) für den Aktuatorstift (22) sowie einen in Umfangsrichtung dazwischenliegenden, kurvenförmig gebogenen Stellbereich (30) zum axialen Verschieben des Stellkörpers (16) aufweist,
wobei der Einkoppelbereich (26) und der Auskoppelbereich (28) in Umfangsrichtung benachbarter Kulissenführungsabschnitte (18) auf derselben axialen Position angeordnet sind, und
wobei das Schaltelement (12) eine Schiebemuffe des Schaltgetriebes ist,
**dadurch gekennzeichnet, dass** die Antriebswelle (24) und die Schaltwelle (14) durch ein Übersetzungsgetriebe (34) mit fester Übersetzung gekoppelt sind.

2. Schaltgetriebe nach Anspruch 1, **dadurch gekennzeichnet, dass** in Umfangsrichtung benachbarte Kulissenführungsabschnitte (18) ineinander übergehen und eine in Umfangsrichtung stetig umlaufende Kulissenführung bilden.

3. Schaltgetriebe nach Anspruch 1, **dadurch gekennzeichnet, dass** in Umfangsrichtung benachbarte Kulissenführungsabschnitte (18) voneinander beabstandet sind.

4. Schaltgetriebe nach einem der vorhergehenden Ansprüche, **dadurch gekennzeichnet, dass** die Einkoppelbereiche (26) und/oder die Auskoppelbereiche (28) zumindest abschnittsweise als Rampen (32) zur Verringerung einer radialen Nuttiefe ausgeführt sind.

5. Schaltgetriebe nach einem der vorhergehenden Ansprüche, **dadurch gekennzeichnet, dass** der Einkoppelbereich (26) und der entgegengesetzte Auskoppelbereich (28) eines Kulissenführungsabschnitts (18) axial voneinander beabstandet sind.

6. Schaltgetriebe nach einem der vorhergehenden Ansprüche, **dadurch gekennzeichnet, dass** der Stellkörper (16) genau zwei Kulissenführungsabschnitte (18) aufweist.

7. Schaltgetriebe nach einem der Ansprüche 1 bis 5, **dadurch gekennzeichnet, dass** der Stellkörper (16) genau vier Kulissenführungsabschnitte (18) aufweist.

8. Schaltgetriebe nach einem der Ansprüche 1 bis 5, **dadurch gekennzeichnet, dass** der Stellkörper (16) eine gerade Anzahl an Kulissenführungsabschnitten (18) aufweist.

9. Schaltgetriebe nach einem der vorhergehenden Ansprüche, **dadurch gekennzeichnet, dass** ein Drehwinkelsensor (36) zur Bestimmung der Drehstellung des Stellkörpers (16) vorgesehen ist.

10. Schaltgetriebe nach einem der vorhergehenden Ansprüche , **dadurch gekennzeichnet, dass** der Stellkörper (16) und das Schaltelement (12) in axialer Richtung über ein Federelement (40) gekoppelt sind.

## Claims

1. A manual transmission for vehicles, comprising a drive shaft (24) and a device for axially adjusting a gearshift element (12), with:
a gearshift shaft (14) which is rotatable about an axis (A),
an actuator body (16) which is connected non-rotationally and also axially displaceably to the gearshift shaft (14) and on a peripheral surface has at least two slotted guide portions (18) designed as grooves, and also
a linear actuator (20) which is associated with the actuator body (16) and has an actuable actuator pin (22) which for axially displacing the actuator body (16) can engage in the slotted guide portions (18),
wherein each slotted guide portion (18) has a coupling-in region (26) for the actuator pin (22), an opposed coupling-out region (28) for the actuator pin (22) and also an actuating region (30) which is bent in a curve lying therebetween in the peripheral direction for axially displacing the actuator body (16),
wherein the coupling-in region (26) and the coupling-out region (28) in the peripheral direction of adjacent slotted guide portions (18) are arranged at the same axial position, and
wherein the gearshift element (12) is a sliding sleeve of the manual transmission,
**characterised in that** the drive shaft (24) and the gearshift shaft (14) are coupled by a transmission gear mechanism (34) with a fixed transmission ratio.

2. A manual transmission according to Claim 1, **characterised in that** slotted guide portions (18) which are adjacent in the peripheral direction merge into one another and form a slotted guide which runs around continuously in the peripheral direction.

3. A manual transmission according to Claim 1, **characterised in that** slotted guide portions (18) which are adjacent in the peripheral direction are spaced apart from each other.

4. A manual transmission according to one of the preceding claims, **characterised in that** the coupling-in regions (26) and/or the coupling-out regions (28) are embodied at least in portions as ramps (32) for reducing a radial groove depth.

5. A manual transmission according to one of the preceding claims, **characterised in that** the coupling-in region (26) and the opposing coupling-out region (28) of a slotted guide portion (18) are spaced apart axially from each other.

6. A manual transmission according to one of the preceding claims, **characterised in that** the actuator body (16) has precisely two slotted guide portions (18).

7. A manual transmission according to one of Claims 1 to 5, **characterised in that** the actuator body (16) has precisely four slotted guide portions (18).

8. A manual transmission according to one of Claims 1 to 5, **characterised in that** the actuator body (16) has an even number of slotted guide portions (18).

9. A manual transmission according to one of the preceding claims, **characterised in that** an angle-of-rotation sensor (36) for determining the rotary position of the actuator body (16) is provided.

10. A manual transmission according to one of the preceding claims, **characterised in that** the actuator body (16) and the gearshift element (12) are coupled in the axial direction by way of a spring element (40).

## Revendications

1. Boîte de vitesses pour véhicule comportant un arbre moteur (24) et un dispositif pour déplacer axialement un élément de commande (12) comprenant :
- un arbre de commande (14) tournant autour d'un axe (A),
- un organe de positionnement (16) solidaire en rotation et coulissant axialement par rapport à l'arbre de commande (14) et ayant une surface périphérique avec au moins deux segments d'une coulisse de guidage (18) réalisée comme une rainure, ainsi que
- un actionneur linéaire (20) associé à l'organe de positionnement (16) et ayant une broche d'actionneur (22), commandée, qui pénètre dans les segments de coulisse de guidage (18) pour coulisser axialement l'organe de positionnement (16),
- à chaque segment de coulisse de guidage (18) sont associées une plage d'embrayage (26) pour la broche (22) de l'actionneur, une plage de débrayage (28), opposée pour la broche d'actionneur (22) ainsi qu'une plage de positionnement (30) cintrée en forme de came dans la direction périphérique, intermédiaire,
- la plage d'embrayage (26) et la plage de débrayage (28) étant des segments de coulisse de guidage (18) voisins dans la direction périphérique, et l'élément de commande (12) étant un pignon baladeur de la boîte de vitesses,
**caractérisée en ce que**
l'arbre d'entraînement (24) et l'arbre de commande (14) sont couplés par un dispositif multiplicateur (34) à rapport de multiplication fixe.

2. Boîte de vitesses selon la revendication 1,
**caractérisée en ce que**
les segments de coulisse de guidage (18) voisins dans la direction périphérique se rejoignent et forment une coulisse de guidage périphérique, continue dans la direction périphérique.

3. Boîte de vitesses selon la revendication 1,
**caractérisée en ce que**
les segments de coulisse de guidage (18) voisins dans la direction périphérique sont écartés l'un de l'autre.

4. Boîte de vitesses selon l'une des revendications précédentes,
**caractérisée en ce que**
les plages d'embrayage (26) et/ou de débrayage (28) sont réalisées au moins partiellement sous la forme d'une rampe (32) pour réduire la profondeur radiale des rainures.

5. Boîte de vitesses selon l'une des revendications précédentes,
**caractérisée en ce que**
la plage d'embrayage (26) et la plage de débrayage (28), opposées sont écartées axialement l'une de l'autre par un segment de coulisse de guidage (18).

6. Boîte de vitesses selon l'une des revendications précédentes,
**caractérisée en ce que**
l'organe de positionnement (16) comporte précisément deux segments de coulisse de guidage (18).

7. Boîte de vitesses selon l'une des revendications 1 à 5,
**caractérisée en ce que**
l'organe de positionnement (16) a exactement quatre segments de coulisse de guidage (18).

8. Boîte de vitesses selon l'une des revendications 1 à 5,
**caractérisée en ce que**
l'organe de positionnement (16) a un nombre pair de segments de coulisse de guidage (18).

9. Boîte de vitesses selon l'une des revendications précédentes,
**caractérisée par**
un capteur d'angle de rotation (36) pour déterminer la position en rotation de l'organe de positionnement (16).

10. Boîte de vitesses selon l'une des revendications précédentes,
**caractérisée en ce que**
l'organe de positionnement (16) et l'élément de commande (12) sont couplés dans la direction axiale par un élément de ressort (40).
